# EUROPEAN PATENT SPECIFICATION

(11) **EP 2 917 245 B1**
(45) Date of publication and mention of the grant of the patent: **06.03.2024**
(21) Application number: 13792224.1
(22) Date of filing: 06.11.2013
(51) Int. Cl.: C08F 2/06, C08F 220/18, C08F 265/04, C08F 283/01, C08F 285/00, C09D 151/08, C08F 2/14, C09D 5/02

(54) **NON-AQUEOUS DISPERSIONS COMPRISING AN ACRYLIC POLYMER STABILIZER AND AN ALIPHATIC POLYESTER STABILIZED SEED POLYMER**
NICHTWÄSSRIGE DISPERSIONEN MIT EINEM ACRYLPOLYMERSTABILISATOR UND EINEM DURCH EIN ALIPHATISCHES POLYESTER STABILISIERTEN BASISPOLYMER
DISPERSIONS NON AQUEUSES COMPRENANT UN STABILISANT DE POLYMÈRE ACRYLIQUE ET UN POLYMÈRE GERME STABILISÉ DE TYPE POLYESTER ALIPHATIQUE

(30) Priority: 06.11.2012 US 201213669537
(43) Date of publication of application: 16.09.2015
(73) Proprietor: PPG Industries Ohio, Inc., Cleveland, OH 44111 (US)
(72) Inventor: WANG, Wei, Allison Park, Pennsylvania 15101 (US); FENN, David R., Allison Park, Pennsylvania 15101 (US); MARTIN, Roxalana, Pittsburgh, Pennsylvania 15235 (US); SADVARY, Richard J., Pittsburgh, Pennsylvania 15235 (US); SIMPSON, Dennis A., Sarver, Pennsylvania 16055 (US); WILLIAMS, Richard, Monroeville, Pennsylvania 15146 (US)
(74) Representative: f & e patent
(86) International application number: PCT/US2013/068711
(87) International publication number: WO 2014/074587

(56) References cited:
- GB-A- 2 140 434
- JP-A- 2002 060 697
- JP-A- 2002 235 040
- US-B1- 6 372 840

## Description

### FIELD OF THE INVENTION

The present invention relates to a non-aqueous dispersion comprising a continuous phase and a dispersed phase, wherein the dispersed phase comprises the dispersion polymerization reaction product prepared from a reaction mixture comprising an ethylenically unsaturated monomer, an acrylic polymer stabilizer, and an aliphatic polyester stabilized seed polymer.

### BACKGROUND INFORMATION

Non-aqueous dispersions are known, as are microparticles produced by non-aqueous dispersion techniques. Typically, non-aqueous dispersions are prepared by the free radical addition polymerization of ethylenically unsaturated monomers in a hydrocarbon rich dispersing medium. The polymerization is carried out in the presence of a steric stabilizer, a portion of which is soluble in the dispersing medium and a portion of which is associated with the dispersed polymer; the dispersed polymer is insoluble in the dispersing medium. The steric stabilizer can be physically or chemically bound to the dispersed polymer. The portion of the steric stabilizer that is soluble in the dispersing medium is typically an aliphatic polyester or an acrylic polymer that is prepared from aliphatic monomers. There are several drawbacks with non-aqueous dispersions produced using these types of stabilizers due to the large difference in polarity, compatibility and solubility characteristics between the stabilizer and the dispersed polymer. The non-aqueous dispersions can become unstable if polar solvents are added, because the stabilizing segment becomes less soluble as the polarity of the continuous phase increases. If the non-aqueous dispersions are used in coatings, any fraction of the steric stabilizer that does not remain associated with the dispersed polymer during film formation may become incompatible. It may form a film at the interface between the substrate and other coating layers, leading to loss of adhesion, or it may form regions of high concentration within the coating leading to defects such as craters. The compatibility of the non-aqueous dispersion with added polar solvents could be improved by increasing the polarity of the stabilizer and the dispersing medium slightly, however, there are limits to how polar the stabilizer can be before it becomes too close in polarity to that of the dispersed polymer and the non-aqueous dispersion itself is no longer stable. In general, as the difference in polarity of stabilizer and the dispersed polymer becomes smaller, the particle size of the microparticles becomes larger and the amount of solution phase polymer increases, eventually resulting in an unstable dispersion. Non-aqueous dispersions that are compatible with polar solvents while remaining small in particle size and low in solution polymer would be desirable because they would be of practical use in a wider variety of coatings products. US 6,372,840 discloses a dispersion containing acrylic polymer microparticles formed by free radical addition copolymerization of unsaturated monomers in a hydrocarbon dispersing medium in the presence of a first polymeric dispersion stabilizer having an acrylic backbone and polyester side chains and a second polymeric dispersion stabilizer being a branched polyester.
GB 2140434 A relates to a non-aqueous dispersion comprising an aliphatic hydrocarbon solvent and particles stably dispersed in the dispersion medium wherein said particles are composed of a particle made of a polyester-modified vinyl copolymer and a vinyl resin dispersion stabilizer.

### SUMMARY OF THE INVENTION

The present invention is directed to a non-aqueous dispersion comprising a continuous phase and a dispersed phase, wherein the dispersed phase comprises a dispersion polymerization reaction product prepared from a reaction mixture comprising an ethylenically unsaturated monomer, an acrylic polymer stabilizer, and an aliphatic polyester stabilized seed polymer.

The non-aqueous dispersion may contain particles having an average particle size of less than 180 nm.

Coatings and methods for using the same are also within the scope of the present invention.

### DETAILED DESCRIPTION OF THE INVENTION

The present invention is directed to a non-aqueous dispersion comprising a continuous phase and a dispersed phase, wherein the dispersed phase comprises a dispersion polymerization reaction product prepared from a reaction mixture comprising an ethylenically unsaturated monomer, an acrylic polymer stabilizer, and an aliphatic polyester stabilized seed polymer. The terms "continuous phase " and "dispersed phase" will be understood by those skilled in the art, and are described in detail in Pure Appl. Chem., Vol. 83, No. 12, pp. 2229-2259 (2011),. As used herein, the term "aliphatic polyester" refers to a polyester that is soluble in an aliphatic hydrocarbon solvent such as heptane. The carbon to oxygen ratio of the polyester can be used to predict this solubility. The ratio can be calculated from the mole ratio of the monomers minus the water of esterification. For example, if the carbon to oxygen ratio of the polyester is from 4:1 to 20:1, such as from 6:1 to 12:1, the polyester would be soluble in a hydrocarbon solvent such as heptane, or in a slightly more polar solvent system, such as 60% ISOPAR K and 40% butyl acetate. ISOPAR K is a hydrocarbon solvent commercially available from the Exxon-Mobile Company. A suitable polyester would be, for example, poly-12-hydroxy stearic acid, which has a carbon to oxygen ratio of 9:1.

The aliphatic polyester can be used to prepare a stabilizer for the seed stage of the present invention, sometimes referred to herein as the "seed stage stabilizer". The seed stage stabilizer may comprise two segments, one of which comprises the aliphatic polyester described above, and one of which is of a different polarity from the polyester and is relatively insoluble in the aliphatic hydrocarbon solvent. The first of these is sometimes referred to herein as the "aliphatic polyester component" and the second as the "stabilizer component". Suitable stabilizer components are known and some examples have been described in United States Patent Number 4,147,688, Column 5, Line 1 - Column 6, Line 44.

In one embodiment, the aliphatic polyester component can comprise poly-12-hydroxy stearic acid having a number average molecular weight of about 300 to 3,000 and comprising both acid and hydroxyl functionality. The poly-12-hydroxystearic acid may then be reacted with a compound that comprises (meth)acrylate functionality as well as a second type of functional group that can react with the hydroxyl functionality of the poly-12-hydroxy stearic acid. A suitable compound would be, for example, glycidyl (meth)acrylate. The reaction product of the poly-12-hydroxy stearic acid and glycidyl (meth)acrylate can be further reacted with an ethylenically unsaturated monomer having a different polarity from poly-12-hydroxy stearic acid by a standard free-radical polymerization reaction to provide the polyester stabilizer of the present invention. Suitable ethylenically unsaturated monomers include but are not limited to (meth)acrylic acid, methyl (meth)acrylate, ethyl (meth)acrylate, n-butyl (meth)acrylate, isobutyl (meth)acrylate, 2-ethylhexyl (meth)acrylate, isobornyl (meth)acrylate, 2-hydroxyethyl (meth)acrylate, 2-hydroxypropyl (meth)acrylate, (meth)acrylic acid, glycidyl (meth)acrylate, styrene, alpha-methylstyrene, lauryl (meth)acrylate, stearyl (meth)acrylate, itaconic acid and its esters. In one embodiment, the ethylenically unsaturated monomer comprises methyl methacrylate, glycidyl methacrylate, and methacrylic acid. It will be appreciated that standard free-radical polymerization techniques are well-known to those skilled in the art. The seed stage stabilizer may be from 20 weight % to 65 weight % polyester, such as from 25 weight % to 60 weight %, 30 weight % to 55 weight %, or 33 weight % to 53 weight % polyester, with weight % based on the total weight of the components of the seed stage stabilizer.

The seed stage stabilizer can be used to prepare a seed polymer. As used herein, the term "seed polymer" refers to a dispersed polymer that has a particle size smaller than 80 nm, such as smaller than 50 nm. The seed polymer generally comprises the seed stage stabilizer described above and dispersed polymer. The seed polymer can be prepared by dissolving the seed stage stabilizer in a suitable solvent or mixture of solvents, and the monomer(s) used to form the seed polymer ("seed monomer(s)") may be added to the solution at an elevated temperature over a period of time, during which a radical initiator may also be added to the mixture. The dispersed polymer can be covalently bonded, or grafted, to the seed stage stabilizer. A seed polymer can be prepared, for example, from a seed stage stabilizer and an ethylenically unsaturated monomer such as a (meth)acrylate monomer. The polymer formed from the ethylenically unsaturated monomer should be insoluble in the continuous phase in order to provide a stable dispersion. It will be appreciated by those skilled in the art that, if the seed stage stabilizer comprises ethylenic unsaturation, then in addition to the polymerization of the seed monomer(s) with other seed monomer(s), at least some of the polymerizable double bonds of the stabilizer will react with some of the seed monomer(s) under these conditions. Through this process, the seed polymer will become grafted, that is, covalently bonded, to the seed stage stabilizer. A suitable seed polymer can be prepared from a seed stage stabilizer comprising poly-12-hydroxystearic acid in 60% ISOPAR K and 40% butyl acetate and methyl methacrylate.

The seed polymer as described above can be a stable dispersion. For example, the seed polymer can be prepared and stored for use at a later time. Alternatively, it can be used immediately in the preparation of the non-aqueous dispersion of the present invention.

It will be understood that the term "continuous phase" refers to a liquid medium such as a solvent or a mixture of solvents, and is sometimes referred to herein as the "solvent". The continuous phase can also be referred to herein as a dispersing medium or carrier. Any suitable carrier can be used including an ester, ketone, glycol ether, alcohol, hydrocarbon or mixtures thereof. Suitable ester solvents include alkyl acetates such as ethyl acetate, n-butyl acetate, n-hexyl acetate, and mixtures thereof. Examples of suitable ketone solvents include methyl ethyl ketone, methyl isobutyl ketone, and mixtures thereof. Examples of suitable hydrocarbon solvents include toluene, xylene, aromatic hydrocarbons such as those available from Exxon-Mobil Chemical Company under the SOLVESSO trade name, and aliphatic hydrocarbons such as hexane, heptane, nonane, and those available from Exxon-Mobil Chemical Company under the ISOPAR and VARSOL trade names. In certain embodiments the carrier is volatile. In certain embodiments the continuous phase is not designated as a volatile organic compound (VOC). In certain embodiments the continuous phase comprises a reactive diluent.

As noted above, the present non-aqueous dispersions further comprise an acrylic polymer stabilizer. The terms "acrylic polymer stabilizer" or simply "acrylic stabilizer" as used in the context of the present invention refer to a polymer that comprises 50 weight % or greater (meth)acrylic monomers. In certain embodiments, the present acrylic stabilizers comprise 75 weight % or greater, such as 90 weight % or greater or 95 weight % or greater of acrylic monomers. In certain embodiments the stabilizer comprises 100 weight% acrylic monomers. In certain embodiments, the stabilizer comprises polar acrylic monomers, such as hydroxyl functional acrylic monomers, in an amount of 30 weight % or less, such as 20 weight % or less, 15 weight % or less or 10 weight % or less. The term "polar" as used herein refers to acrylic monomers or compounds that have a solubility parameter (van Krevelen) at 298 K of 19 MPa^0.5or more. In other embodiments, the stabilizer comprises nonpolar acrylic monomers, such as 2-ethyl hexyl acrylate, which can be in amounts of 5 weight % or greater, such as 10 weight % or greater. The term "non-polar" describes substances that have a solubility parameter (van Krevelen) at 298 K lower than 19 MPa^0.5. Weight %, as used in the context of weight % of monomers, refers to the weight % of monomers used in the formation of the stabilizer, and does not include other ingredients, such as initiators, chain transfer agents, additives, used to form the stabilizer. As used herein, the term (meth)acrylic refers generally to acrylics, methacrylics, styrene and any derivatives of any of these.

Suitable monomers for the preparation of the acrylic stabilizer include but are not limited to methyl (meth)acrylate, ethyl (meth)acrylate, n-butyl (meth)acrylate, isobutyl (meth)acrylate, 2-ethylhexyl (meth)acrylate, isobornyl (meth)acrylate, 2-hydroxyethyl (meth)acrylate, 2-hydroxypropyl (meth)acrylate, (meth)acrylic acid, glycidyl (meth)acrylate, styrene, alpha-methylstyrene, lauryl (meth)acrylate, stearyl (meth)acrylate, itaconic acid and its esters, allyl (meth)acrylate, ethylene glycol dimethacrylate, hexanediol diacrylate. As noted above, 50 weight % or greater of the monomers used in the formation of the acrylic stabilizer are acrylic.

In certain embodiments, the acrylic stabilizer is nonlinear. As used herein, the term "nonlinear" means that there is at least one branch point along the backbone of the polymer. In some cases, there may be multiple branch points (i.e. "hyperbranched"), and in some embodiments, the branches can form connections between polymer chains (i.e. internal crosslinks). It will be appreciated that polymer branching can be quantified using the Mark-Howink parameter. In certain embodiments, the Mark-Howink parameter of the present nonlinear acrylic stabilizers as measured by triple detector GPC is 0.2-0.7, such as 0.3-0.6. The branching can be introduced, for example, by using a polyfunctional ethylenically unsaturated monomer in the formation of the acrylic stabilizer. A polyfunctional ethylenically unsaturated monomer is a monomer that has two or more ethylenically unsaturated functional groups within the same monomer molecule, such as allyl (meth)acrylate, ethylene glycol dimethacrylate, or hexanediol diacrylate. Alternatively, the branching can be introduced by using two or more coreactive monomers, such as glycidyl methacrylate and acrylic acid, in the formation of the acrylic stabilizer.

In certain embodiments, the acrylic stabilizer comprises ethylenic unsaturation. This ethylenic unsaturation can be introduced, for example, by using a polyfunctional ethylenically unsaturated monomer in the formation of the acrylic stabilizer, wherein the two (or more) ethylenically unsaturated functional groups within the monomer molecule have different reactivities towards the other (meth)acrylate monomers used to form the stabilizer. Each polyfunctional ethylenically unsaturated monomer molecule may react completely with other (meth)acrylate monomers to form branch points/crosslinks, or it may react incompletely and retain at least one of its ethylenically unsaturated functional groups. This unsaturation is then available to react during the preparation of the non-aqueous dispersion, allowing the acrylic stabilizer to be covalently bonded to the dispersed phase polymer. A suitable monomer for this purpose can be, for example, allyl (meth)acrylate. Alternatively, the unsaturation can be introduced by reacting the acrylic polymer with a compound that comprises both ethylenic unsaturation and another functional group that can react with a functional group on the acrylic polymer. For example, the acrylic polymer can have oxirane groups, and the compound can comprise a (meth)acrylate group and an acid group, so that the acid group on the compound would react with the oxirane group on the acrylic polymer. The reaction conditions can be controlled so that polymerization of the (meth)acrylate groups on the compound would be prevented; suitable controls would be a reduced reaction temperature such as below 110°C, the presence of a free radical inhibitor such as para-methoxyphenol, and the use of an oxygen-rich atmosphere. Under controlled conditions such as these, the (meth)acrylate group on the compound would be retained, and this unsaturation would then be available to react during the preparation of the non-aqueous dispersion, allowing the acrylic stabilizer to be covalently bonded to the dispersed phase polymer. A suitable example for the introduction of unsaturation to the acrylic stabilizer would be the reaction of an acrylic polymer that comprises glycidyl methacrylate, such as 3-15 weight % glycidyl methacrylate, with methacrylic acid, where the ratio of acrylic polymer to methacrylic acid is from about 200:1 to about 33:1.

Generally, the acrylic stabilizer is formed by solution polymerization of the (meth)acrylate monomers by a standard radical polymerization method known to those skilled in the art. For example, the (meth)acrylate monomers can be added over a period of time to a suitable solvent at an elevated temperature, such as at the reflux temperature of the solvent. A radical initiator, such as a peroxide initiator, is added to the reaction mixture over approximately the same time period. The initiator is chosen so that it will induce radical polymerization of the monomers at the selected reaction temperature. Suitable free radical initiators include peroxy initiators such as benzoyl peroxide, lauroyl peroxide, or tert-butylperoxy-2-ethyl-hexanoate (tert-butylperoctoate) and azo initiators such as 2,2'-azobis (2,4-dimethylpentane nitrile) or 2,2'-azobis (2-methylbutane nitrile). After the monomers and initiator have been added to the reaction mixture, the mixture may be held at the reaction temperature for an extended period of time, during which additional initiator may be added to ensure complete conversion of the monomers. Progress of the reaction may be monitored by solids measurement, or by gas chromatography.

In certain embodiments, the acrylic stabilizer can be prepared in a continuous reactor. For example, (meth)acrylate monomers and a radical initiator, such as a peroxide initiator, can be fed continuously through a continuous reactor with a 1 to 20 minute residence time at 150 - 260°C. The (meth)acrylate monomers used herein could be polar, non-polar, or a mixture of both types.

In certain embodiments, the molar ratio of acrylate to methacrylate in the acrylic stabilizer can be about 2:1. In other embodiments, the initiator level is 0.5 to 2.0 weight %, such as 1.0 to 1.5 weight % based on the total weight of the monomers.

The acrylic stabilizer can have a weight average molecular weight ("Mw") as measured by gel permeation chromatography relative to linear polystyrene standards of 10,000 to 1,000,000, such as 20,000 to 80,000, or 30,000 to 60,000. The stabilizer may comprise ethylenic unsaturation, as detected by ¹³C NMR spectroscopy. The stabilizer can contain functional groups, such as hydroxyl groups, carboxylic acid groups, and/or epoxy groups.

The acrylic stabilizer will generally be compatible with the continuous phase, or solvent, of the non-aqueous dispersion. In certain embodiments, the solubility parameters of the acrylic stabilizer and the solvent may be similar, such as a difference of 3 units or less, or 2.5 units or less; if the difference is more than 3 units, then the acrylic stabilizer may not be soluble in the solvent. In certain embodiments, the van Krevelen solubility parameter of the acrylic stabilizer at 298 K is 17 to 28 units, such as 17.5 to 20 units or 18 to 19 units. As used in reference to solubility parameter, "units" refers to MPa^0.5. In the case of a copolymer, the solubility parameter can be calculated from the weighted average of the van Krevelen solubility parameter of the homopolymers derived from the individual monomers. The van Krevelen solubility parameter for a homopolymer is calculated using Synthia implemented in Material Studio 5.0, available from Accelrys, Inc., San Diego, CA. Solubility parameters for solvents can be obtained from "Hansen solubility parameters: a user's handbook", Charles M. Hansen, CRC Press, Inc., Boca Raton, Florida, 2007. The solubility parameter of a mixture of solvents can be calculated from the weighted average of the solubility parameter of the individual solvents.

The non-aqueous dispersion of present invention comprises a continuous phase and a dispersed phase, wherein the dispersed phase comprises a dispersion polymerization reaction product prepared from a reaction mixture comprising an ethylenically unsaturated monomer, an acrylic polymer stabilizer, and an aliphatic polyester stabilized seed polymer. The ethylenically unsaturated monomer may be a single type of monomer or a mixture of monomers. These monomers are sometimes referred to herein as the "core monomers", as distinguished from the monomers used in the acrylic stabilizer or seed polymer. Suitable core monomers include but are not limited to methyl (meth)acrylate, ethyl (meth)acrylate, n-butyl (meth)acrylate, isobutyl (meth)acrylate, 2-ethylhexyl (meth)acrylate, isobornyl (meth)acrylate, 2-hydroxyethyl (meth)acrylate, 2-hydroxypropyl (meth)acrylate, (meth)acrylic acid, glycidyl (meth)acrylate, styrene, alpha-methylstyrene, lauryl (meth)acrylate, stearyl (meth)acrylate, itaconic acid and its esters. In certain embodiments the core monomers comprise two or more coreactive monomers, such as glycidyl methacrylate and acrylic acid. It will be understood by those skilled in the art that the use of coreactive monomers will result in branching, or internal crosslinking, of the core during the polymerization process. Alternatively, the internal crosslinking can be introduced by using a polyfunctional ethylenically unsaturated monomer, such as hexanediol diacrylate, ethylene glycol dimethacrylate, trimethylol propane triacrylate, divinylbenzene, or other suitable poly(meth)acrylate, in the core monomer composition.

In certain embodiments, the solubility parameter of the continuous phase, or solvent, is lower than that of the core monomers, such as a difference of 3 units or greater, or 3.8 units or greater; if there is less than a 3 unit difference the core monomers may be too soluble in the continuous phase and the microparticles of the dispersion may not readily form.

The dispersed phase of the non-aqueous dispersion of present invention comprises the dispersion polymerization reaction product of an ethylenically unsaturated monomer, an acrylic polymer stabilizer, and an aliphatic polyester stabilized seed polymer. In some embodiments, the weight ratio of the seed polymer to the ethylenically unsaturated monomer (i.e., the "core" monomers) is from 1: 100 to 20: 100, such as from 5: 100 to 15: 100. In some embodiments, the weight ratio of the acrylic polymer stabilizer to the "core" monomers is from 10:100 to 100:10, such as from 20:100 to 100:20.

The non-aqueous dispersion of present invention can be prepared as follows. It will be appreciated that this method is illustrative of the invention and that other monomers, parameters, reaction conditions, can also be used. A mixture of the seed stage stabilizer and seed monomer(s), such as an ethylenically unsaturated monomer, can be added to a hydrocarbon solvent such as ISOPAR E (isoparaffinic hydrocarbon solvent available from ExxonMobil Chemical) at an elevated temperature such as 90°C, over a period of time such as over 30 minutes. The ratio of seed stage stabilizer to seed monomer can be from 0.2:1.0 to 4.0:1.0 such as from 0.5:1.0 to 2.0:1.0. A radical initiator, such as azobis-2,2'-(2-methylbutyronitrile), can be added to the reaction mixture over approximately the same time period. The initiator is chosen so that it will induce radical polymerization of the seed monomer at the selected reaction temperature. The radical initiator may comprise 1% to 10%, such as 4% to 8%, of the composition of the reactants by weight. During the addition, the mixture can be agitated at a suitable speed, such as from 200 to 300 rpm. After the addition of the seed stage stabilizer, the seed monomer(s), and the radical initiator is complete, the resulting mixture can be from about 2% to 12%, such as from about 4% to 10%, weight solids. The mixture can be held at the same elevated temperature for an additional period of time, such as 30 minutes. The preceding process provides the aliphatic polyester stabilized seed polymer of the present invention. At this point, the mixture can be isolated and stored for use at a later time. Alternatively, the mixture can be used immediately.

To the mixture of the aliphatic polyester stabilized seed polymer can be added a mixture of acrylic polymer stabilizer and an ethylenically unsaturated monomer at an elevated temperature, such as 90°C, over a period of time, such as over 180 minutes. In some embodiments, additional seed stage stabilizer, such as 0.5 to 5.0 weight %, or 1.0 to 2.0 weight %, based on total weight of the monomers used in preparing the non-aqueous dispersion may be added with the mixture of the acrylic polymer stabilizer and the ethylenically unsaturated monomer. A chain transfer agent, such as N-octylmercaptan, may be added with the acrylic polymer stabilizer, ethylenically unsaturated monomer, and/or seed stage stabilized seed polymer, at about 0.5 to 5.0 weight %, such as 1.0 to 2.0 weight %. The ethylenically unsaturated monomer(s) are described above. A radical initiator, such as azobis-2,2'-(2-methylbutyronitrile), can be added to the reaction mixture over approximately the same time period. The initiator is chosen so that it will induce radical polymerization of the core monomers at the selected reaction temperature. The radical initiator may comprise 0.2% to 5.0%, such as 0.5% to 2.0%, of the composition of the reactants by weight. After the addition of the acrylic stabilizer, the ethylenically unsaturated monomer(s), and the radical initiator is complete, the resulting mixture may be held at the reaction temperature for an extended period of time, such as 120 minutes, during which additional initiator may be added to ensure complete conversion of the monomers. Progress of the reaction may be monitored by solids measurement, or by gas chromatography. After the process is complete, the resulting non-aqueous dispersion of the present invention may be from about 15 % to 70%, such as from 20% to 65%, 22% to 62%, or 32% to 52%, weight solids.

The non-aqueous dispersions of the present invention may comprise functionality, such as hydroxyl functionality. The hydroxyl functionality can come from the core monomers and/or the acrylic stabilizer. In certain embodiments, the theoretical hydroxyl value can be from 20 to 100, such as from 40 to 80, or from 50 to 70. Alternatively, the non-aqueous dispersions of the present invention may comprise epoxy functionality. In some embodiments the epoxy equivalent weight may be 400 to 30,000, such as from 700 to 15,000. In certain embodiments the non-aqueous dispersions of the present invention may comprise both hydroxyl and epoxy functionality. In certain embodiments, the non-aqueous dispersions of the present invention may comprise acid functionality. In these embodiments, the theoretical acid value may be from 0.1 to 20, such as from 5 to 15.

The non-aqueous dispersions of the present invention may be internally crosslinked or uncrosslinked. Crosslinked non-aqueous dispersions may be desired in certain embodiments over uncrosslinked non-aqueous dispersions because uncrosslinked materials are more likely to swell or dissolve in the organic solvents that are commonly found in many of the coating compositions to which the dispersions are subsequently added. Crosslinked non-aqueous dispersions may have a significantly higher molecular weight as compared to uncrosslinked dispersions. Crosslinking of the non-aqueous dispersion can be achieved, for example, by including two or more coreactive monomers, or a polyfunctional ethylenically unsaturated monomer with the "core" monomers during polymerization, as described above for suitable "core" monomers. The two or more coreactive monomers, or polyfunctional ethylenically unsaturated monomer, can be present in amounts of 0.1 to 20 % by weight based on the total weight of monomers used in preparing the non-aqueous dispersion, such as from 1 to 10 % by weight.

As noted above, in some embodiments the continuous phase of the non-aqueous dispersion of the present invention comprises a compound that is not designated as a Volatile Organic Compound (VOC). Stated another way, in some embodiments, the continuous phase may be substantially free, may be essentially free and/or may be completely free of VOC. The term "substantially free" as used in this context means the continuous phase and/or dispersions contain less than 10%, "essentially free" means less than 5%, and "completely free" means less than 1% of VOC by weight of the continuous phase. The term "VOC" as used herein, and as defined by the United States Environmental Protection Agency, means any compound of carbon, excluding carbon monoxide, carbon dioxide, carbonic acid, metallic carbides or carbonates, and ammonium carbonate, which participates in atmospheric photochemical reactions. Compounds that are not designated as VOC compounds may include, for example, halogenated hydrocarbons, such as 1,1,2,2-tetrafluoroethane, parachlorobenzotrifluoride, tetrachloroethylene, or 1-chloro-4-(trifluoromethyl)-benzene. A compound that is not designated as a VOC is sometimes referred to as a "non-VOC" compound. A suitable non-VOC compound for use as a component of the continuous phase of the non-aqueous dispersion of the present invention can be 1-chloro-4-(trifluoromethyl)-benzene, which is available commercially under the trade name OXSOL 100 from Milenia Agro Ciencieas S.A.

The non-aqueous dispersion of the present invention wherein the continuous phase comprises a compound that is not designated as a VOC may be prepared using a similar process as described above for the non-aqueous dispersion of the present invention. The continuous phase may comprise the non-VOC compound throughout the entire process, or it may be introduced at a later stage in the process. For example, the aliphatic polyester stabilized seed polymer of the present invention can be prepared as described above, using a hydrocarbon solvent such as heptane as the continuous phase; the hydrocarbon solvent or mixtures thereof can comprise all or part of the continuous phase. The acrylic polymer stabilizer and an ethylenically unsaturated monomer can then be added, as described above; in some embodiments, a hydrocarbon solvent, a non-VOC compound or mixtures thereof may be added with the acrylic polymer stabilizer and ethylenically unsaturated monomer. In embodiments wherein both a hydrocarbon and a non-VOC compound are used, the ratio of hydrocarbon to non-VOC compound can be from 0.1: 1 to 10:1, such as from 1:1 to 4:1. In some embodiments, the ratio of ethylenically unsaturated monomer(s) to hydrocarbon and/or non-VOC compound is from 0.1:1.0 to 5:1, such as from 0.2:1 to 2:1.

In some embodiments, additional seed stage stabilizer and/or a chain transfer agent may be added with the acrylic polymer stabilizer, ethylenically unsaturated monomer, and, if used, the hydrocarbon and/or non-VOC compound, as described above for the non-aqueous dispersion of the present invention. After the process is complete, additional non-VOC compound may be added so that the final composition of the continuous phase is from 20 weight % to 70 weight %, such as from 36 weight % to 56 weight % non-VOC compound. In some embodiments, the component of the continuous phase that is not the non-VOC component may be distilled out of the mixture after the non-aqueous dispersion is formed; in these embodiments, the non-VOC compound remains in the continuous phase. For example, if a mixture of a hydrocarbon, such as heptane, and a non-VOC compound, such as OXSOL 100, is used in the continuous phase, the heptane may be distilled out after the non-aqueous dispersion is formed, so that the OXSOL 100 remains in the continuous phase. In some embodiments, the continuous phase comprises more than 50%, such as more than 70% or more than 90%, non-VOC compound.

In some embodiments, the continuous phase of the non-aqueous dispersion of the present invention comprises a reactive diluent. The term "reactive diluent" as used herein, means a compound that has the capability of reducing the viscosity of a mixture, and is reactive with itself and/or with one or more other components of the mixture under specific conditions. It is generally understood by those skilled in the art that such compounds do not react with the other components of the mixture during mixture preparation or storage, but that they will only react under specific conditions, such as elevated temperatures, exposure to air, radiation, or moisture, the presence of a catalyst, or upon application. For example, a reactive diluent that is used in a coating composition will not react while standing in a sealed container at ambient temperatures, but it may react when the coating composition is applied to the surface of a substrate and exposed to ultraviolet light in the presence of an initiator. The continuous phase of the non-aqueous dispersion of the present invention may comprise any reactive diluent known to those skilled in the art. Suitable reactive diluents include but are not limited to ethylene glycol dimethacrylate, 1,6-hexanediol diacrylate, tripropyelene glycol diacrylate, dipentaerythritol pentaacrylate, allyl diglycol carbonate. In some embodiments the continuous phase comprises more than 50%, such as more than 70% or more than 90%, reactive diluent.

The non-aqueous dispersion of the present invention wherein the continuous phase comprises a reactive diluent can be prepared as generally described above, with a reactive diluent, such as 1,6-hexanediol diacrylate, being added after formation of the aqueous dispersion. The ratio of reactive diluent to the dispersed phase can be from 0.5:1 to 1:1, such as from 1:1 to 5:1. The mixture can then be heated to an elevated temperature, and the solvent(s) or compound(s) of the original continuous phase can be distilled off. For example, the mixture can be heated to 70°C, and the heptane and butyl acetate can be distilled off under reduced pressure, such as at 0.026 - 0,033 bar (20-25 inches Hg).

It will be appreciated by those skilled in the art that the non-aqueous dispersions of the present invention are distinct from latex, which are aqueous dispersions. The present non-aqueous dispersions are also distinct from solution polymers, in that the non-aqueous dispersions have a dispersed phase that is different from the continuous phase, while a solution polymer has a single, homogeneous phase. A "non-aqueous dispersion" as used herein is one in which 75 % or greater, such as 90 % or greater, or 95 % or greater, of the dispersing media is a non-aqueous solvent, such as any of those listed above. Accordingly, a non-aqueous dispersion can still comprise some level of aqueous material, such as water.

It will be appreciated by those skilled in the art that the non-aqueous dispersion of the present invention will comprise, in certain embodiments, a microparticle. The weight average molecular weight of the non-aqueous dispersion as measured by gel permeation chromatography against a linear polystyrene can be very high, such as 50,000 g/mol or greater, 100,000 g/mol or greater, or 250,000 g/mol or greater, or can be so high as to be immeasurable due to gel formation within the particle. In certain embodiments, use of microparticles with high gel content in a coating may contribute to one or more enhanced properties, such as improved appearance, resistance to solvents, acids, improved sag resistance, improved metallic flake orientation, and/or improved resistance to interlayer mixing when multiple coating layers are applied. In certain embodiments, the gel content of the dispersion as measured by the ultracentrifuge separation method is 30 weight percent or greater, such as 40 weight percent or greater, with weight percent based on total solid weight. In the ultracentrifuge separation method on which these values are based, 2 grams of the dispersion is added into a centrifuge tube and then the tube is filled with 10 grams of a solvent such as tetrahydrofuran (THF), and the materials are mixed thoroughly. The prepared centrifuge tube is placed in an ultracentrifuge at a speed at 50,000 rpm or greater, for 30 min or longer. The undissolved fraction of the dispersion is separated and dried to constant weight at 110 °C to provide the gel content of the dispersion.

In certain embodiments, the non-aqueous dispersions of the present invention will have a small particle size, such as less than 500 nm or less than 300 nm, as measured on ZETASIZER instrument. In some embodiments the particle size is less than 180 nm. In certain embodiments, the non-aqueous dispersions of the present invention will not form "seeds", or small visible bits of gelled polymer, when subjected to the seed test described in the examples; as used herein, "seed test" refers to this test.

Any of the non-aqueous dispersions described herein can be further used in a coating. Accordingly, the present invention is further directed to a coating comprising a non-aqueous dispersion comprising a continuous phase and a dispersed phase, wherein the dispersed phase comprises the dispersion polymerization reaction product of an ethylenically unsaturated monomer, an acrylic polymer stabilizer, and an aliphatic polyester stabilized seed polymer.

The non-aqueous dispersions of the present invention can form part of the coating film. In some embodiments, the non-aqueous dispersion can be the main film former, while in other embodiments it can be used as an additive. In some embodiments the non-aqueous dispersion is not crosslinked and becomes part of a thermoplastic or thermoset film upon drying. In other embodiments the non-aqueous dispersion may be crosslinked into the film to form a thermoset coating as discussed below.

The coating compositions can further comprise a crosslinking agent. In certain embodiments, the crosslinking agent will react with the non-aqueous dispersions to form a film forming resin. Suitable crosslinking agents can be chosen by those skilled in the art based upon the chemistry of the non-aqueous dispersion and may include, for example, aminoplast crosslinkers, phenolic crosslinkers, blocked or unblocked isocyanates and 1,3,5-triazine carbamate. Aminoplast crosslinkers can be melamine based, urea based or benzoguanamine based. Melamine cross linkers are widely commercially available, such as from Cytec Industries, Inc., in their CYMEL line. Phenolic crosslinkers include, for example, novolacs and resoles.

It will be appreciated that in certain embodiments the non-aqueous dispersion of the present invention and crosslinker therefor can form all or part of the film-forming resin of the coating. In certain embodiments, one or more additional film-forming resins are also used in the coating. The additional film-forming resin can be selected from, for example, acrylic polymers, polyester polymers, polyurethane polymers, polyamide polymers, polyether polymers, polysiloxane polymers, copolymers thereof, and mixtures thereof. Generally, these polymers can be any polymers of these types made by any method known to those skilled in the art. The additional film-forming resin may be thermosetting or thermoplastic. In embodiments where the additional film-forming resin is thermosetting, the coating composition may further comprise a crosslinking agent that may be selected from any of the crosslinkers described above. The crosslinker may be the same or different from the crosslinker that is used to crosslink the non-aqueous dispersion. In certain other embodiments, a thermosetting film-forming polymer or resin having functional groups that are reactive with themselves are used; in this manner, such thermosetting coatings are self-crosslinking. The coating compositions may be solvent-based liquid compositions.

The coating compositions of the present invention can also comprise any additives standard in the art of coating manufacture including colorants, plasticizers, abrasion-resistant particles, film strengthening particles, flow control agents, thixotropic agents, rheology modifiers, cellulose acetate butyrate, catalysts, antioxidants, biocides, defoamers, surfactants, wetting agents, dispersing aids, adhesion promoters, clays, hindered amine light stabilizers, UV light absorbers and stabilizers, a stabilizing agent, fillers, organic cosolvents reactive diluents , grind vehicles, phosphatized resins such as phosphatized epoxy resins, and other customary auxiliaries, or combinations thereof.

As used herein, the term "colorant" means any substance that imparts color and/or other opacity and/or other visual effect to the composition. The colorant can be added to the coating in any suitable form, such as discrete particles, dispersions, solutions and/or flakes. A single colorant or a mixture of two or more colorants can be used in the coatings of the present invention.

Example colorants include pigments, dyes and tints, such as those used in the paint industry and/or listed in the Dry Color Manufacturers Association (DCMA), as well as special effect compositions. A colorant may include, for example, a finely divided solid powder that is insoluble but wettable under the conditions of use. A colorant can be organic or inorganic and can be agglomerated or non-agglomerated. Colorants can be incorporated into the coatings by grinding or simple mixing. Colorants can be incorporated by grinding into the coating by use of a grind vehicle, such as an acrylic grind vehicle, the use of which will be familiar to one skilled in the art.

Example pigments and/or pigment compositions include, but are not limited to, carbazole dioxazine crude pigment, azo, monoazo, disazo, naphthol AS, salt type (lakes), benzimidazolone, condensation, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPPBO red"), titanium dioxide, carbon black, carbon fiber, graphite, other conductive pigments and/or fillers and mixtures thereof. The terms "pigment" and "colored filler" can be used interchangeably.

Example metallic pigments and/or pigment compositions include, but are not limited to aluminum flake, bronze flakes, coated mica, nickel flakes, tin flakes, silver flakes, copper flakes and combinations thereof.

Example dyes include, but are not limited to, those that are solvent- and/or aqueous-based such as acid dyes, azoic dyes, basic dyes, direct dyes, disperse dyes, reactive dyes, solvent dyes, sulfur dyes, mordant dyes, for example, bismuth vanadate, anthraquinone, perylene aluminum, quinacridone, thiazole, thiazine, azo, indigoid, nitro, nitroso, oxazine, phthalocyanine, quinoline, stilbene, and triphenyl methane.

Example tints include, but are not limited to pigments dispersed in water-based or water miscible carriers such as AQUA-CHEM 896 commercially available from Degussa, Inc., CHARISMA COLORANTS and MAXITONER INDUSTRIAL COLORANTS commercially available from Accurate Dispersions division of Eastman Chemical, Inc.

The colorant can be in the form of a dispersion including, but not limited to, a nanoparticle dispersion. Nanoparticle dispersions can include one or more highly dispersed nanoparticle colorants and/or colorant particles that produce a desired visible color and/or opacity and/or visual effect. Nanoparticle dispersions can include colorants such as pigments or dyes having a particle size of less than 150 nm, such as less than 70 nm, or less than 30 nm. Nanoparticles can be produced by milling stock organic or inorganic pigments with grinding media having a particle size of less than 0.5 mm. Example nanoparticle dispersions and methods for making them are identified in United States Patent Number 6,875,800 B2. Nanoparticle dispersions can also be produced by crystallization, precipitation, gas phase condensation, and chemical attrition (i.e., partial dissolution). In order to minimize re-agglomeration of nanoparticles within the coating, a dispersion of resin-coated nanoparticles can be used. As used herein, a "dispersion of resin-coated nanoparticles" refers to a continuous phase in which is dispersed discreet "composite microparticles" that comprise a nanoparticle and a resin coating on the nanoparticle. Example dispersions of resin-coated nanoparticles and methods for making them are identified in United States Application Number 10/876,031 filed June 24, 2004, and United States Provisional Application Number 60/482,167 filed June 24, 2003.

Example special effect compositions that may be used in the coating of the present invention include pigments and/or compositions that produce one or more appearance effects such as reflectance, pearlescence, metallic sheen, phosphorescence, fluorescence, photochromism, photosensitivity, thermochromism, goniochromism and/or color-change. Additional special effect compositions can provide other perceptible properties, such as reflectivity, opacity or texture. In a non-limiting embodiment, special effect compositions can produce a color shift, such that the color of the coating changes when the coating is viewed at different angles. Example color effect compositions are identified in United States Patent Number 6,894,086. Additional color effect compositions can include transparent coated mica and/or synthetic mica, coated silica, coated alumina, a transparent liquid crystal pigment, a liquid crystal coating, and/or any composition wherein interference results from a refractive index differential within the material and not because of the refractive index differential between the surface of the material and the air.

In certain non-limiting embodiments, a photosensitive composition and/or photochromic composition, which reversibly alters its color when exposed to one or more light sources, can be used in the coating of the present invention. Photochromic and/or photosensitive compositions can be activated by exposure to radiation of a specified wavelength. When the composition becomes excited, the molecular structure is changed and the altered structure exhibits a new color that is different from the original color of the composition. When the exposure to radiation is removed, the photochromic and/or photosensitive composition can return to a state of rest, in which the original color of the composition returns. In one non-limiting embodiment, the photochromic and/or photosensitive composition can be colorless in a non-excited state and exhibit a color in an excited state. Full color-change can appear within milliseconds to several minutes, such as from 20 seconds to 60 seconds. Example photochromic and/or photosensitive compositions include photochromic dyes.

In general, the colorant can be present in the coating composition in any amount sufficient to impart the desired property, visual and/or color effect. The colorant may comprise from 1 to 65 weight % of the present compositions, such as from 3 to 40 weight % or 5 to 35 weight%, with weight % based on the total weight of the compositions.

An "abrasion-resistant particle" is one that, when used in a coating, will impart some level of abrasion resistance to the coating as compared with the same coating lacking the particles. Suitable abrasion-resistant particles include organic and/or inorganic particles. Examples of suitable organic particles include, but are not limited to, diamond particles, such as diamond dust particles, and particles formed from carbide materials; examples of carbide particles include, but are not limited to, titanium carbide, silicon carbide and boron carbide. Examples of suitable inorganic particles, include but are not limited to silica; alumina; alumina silicate; silica alumina; alkali aluminosilicate; borosilicate glass; nitrides including boron nitride and silicon nitride; oxides including titanium dioxide and zinc oxide; quartz; nepheline syenite; zircon such as in the form of zirconium oxide; buddeluyite; and eudialyte. Particles of any size can be used, as can mixtures of different particles and/or different sized particles. For example, the particles can be microparticles, having an average particle size of 0.1 to 50, 0.1 to 20, 1 to 12, 1 to 10, or 3 to 6 microns, or any combination within any of these ranges. The particles can be nanoparticles, having an average particle size of less than 0.1 micron, such as 0.8 to 500, 10 to 100, or 100 to 500 nanometers, or any combination within these ranges.

The coatings of the present invention may comprise 1 to 95, such as 5 to 25, 5 to 90, 20 to 90 or 60 to 80 weight %, with weight % based on total solid weight of the coating, of the non-aqueous dispersion of the present invention. The coating compositions of the present invention may also comprise 0 to 50, such as 5 to 40 or 10 to 30 weight %, with weight % based on total solids weight of the coating, of a crosslinker for the non-aqueous dispersion. Additional components, if used, may comprise up to 60 weight %, such as up to 40 weight %, with weight % based on total solids weight of the coating.

The present coatings can be applied to any substrates known in the art, for example, automotive substrates, industrial substrates, packaging substrates, architectural substrates, wood flooring and furniture, apparel, electronics including housings and circuit boards, glass and transparencies, sports equipment including golf balls. These substrates can be, for example, metallic or non-metallic. Metallic substrates include tin, steel, tin-plated steel, tin free steel, black plate, chromium passivated steel, galvanized steel, aluminum, aluminum foil. Non-metallic substrates include polymeric, plastic, polyester, polyolefin, polyamide, cellulosic, polystyrene, polyacrylic, poly(ethylene naphthalate), polypropylene, polyethylene, nylon, EVOH, polylactic acid, other "green" polymeric substrates, poly(ethyleneterephthalate) ("PET"), polycarbonate, polycarbonate acrylobutadiene styrene ("PC/ABS"), polyamide, wood, veneer, wood composite, particle board, medium density fiberboard, cement, stone, glass, paper, cardboard, textiles, leather both synthetic and natural, and other nonmetallic substrates. The substrate can be one that has been already treated in some manner, such as to impart visual and/or color effect.

The coatings of the present invention can be applied by any means standard in the art, such as electrocoating, spraying, electrostatic spraying, dipping, rolling, brushing.

The coatings can be applied in certain embodiments to a dry film thickness of 1 µm to 102 µm (0.04 mils to 4 mils), such as 7.6 to 51 µm (0.3 to 2) or 17.8 to 33 µm (0.7 to 1.3 mils). In other embodiments the coatings can be applied to a dry film thickness of 2.5 µm (0.1 mils) or greater, 12.7 µm (0.5 mils) or greater 25.4 µm (1.0 mils) or greater, 50.8 µm (2.0 mils) or greater, 127 µm (5.0 mils) or greater, 254 µm (10.0 mils) or greater or even thicker. The coatings of the present invention can be used alone, or in combination with one or more other coatings. For example, the coatings of the present invention can comprise a colorant or not and can be used as a primer, basecoat, and/or top coat. For substrates coated with multiple coatings, one or more of those coatings can be coatings as described herein. The present coatings can, for example, be used in a metallic basecoat.

It will be appreciated that the coatings described herein can be either one component ("1K"), or multi-component compositions such as two component ("2K") or more. A 1K composition will be understood as referring to a composition wherein all the coating components are maintained in the same container after manufacture, during storage, etc. A 1K coating can be applied to a substrate and cured by any conventional means, such as by heating, forced air. The present coatings can also be multi-component coatings, which will be understood as coatings in which various components are maintained separately until just prior to application. As noted above, the present coatings can be thermoplastic or thermosetting.

In certain embodiments, the coating is a clearcoat. A clearcoat will be understood as a coating that is substantially transparent. A clearcoat can therefore have some degree of color, provided it does not make the clearcoat opaque or otherwise impede, to any significant degree, the ability to see the underlying substrate. The clearcoats of the present invention can be used, for example, in conjunction with a pigmented basecoat. The clearcoat can be formulated as is known in the coatings art. In certain embodiments the clearcoat can comprise 0.1 to 90 weight % of the present non-aqueous dispersion, such as 0.5 to 50 weight % or 5 to 15 weight %, with weight % based on the weight of total solids.

In certain embodiments, the coating is used as a primer, such as an anti-chip primer. Anti-chip primer coating compositions are known in the automotive OEM industry, and are generally applied onto various locations of a vehicle such as the leading edges of doors, fenders, hoods and on the A pillar of a vehicle prior to application of a primer-surfacer coating composition over the entire vehicular body. In certain embodiments, the anti-chip primer coating composition is not cured prior to application of one or more subsequent coating layers. Rather, the anti-chip primer coating composition is subjected to an ambient flash step, wherein it is exposed to ambient air for a certain period of time in order to allow for the evaporation of a portion of organic solvent from the anti-chip coating composition. Cure of the anti-chip primer coating composition occurs simultaneously with the one or more additional coating layers (co-cured). This is sometimes referred to as a wet-on-wet method, further defined below. Primers according to the present invention, including anti-chip primers, will typically comprise some colorant and will typically be used with one or more additional coating layers such as after an electrocoat layer and before a primer surface layer, a colored basecoat layer a clearcoat layer.

In certain other embodiments the coating comprises a colorant, such as a pigmented basecoat used in conjunction with a clearcoat, or as a pigmented monocoat. Such coating layers are used, for example, in the automotive industry to impart a decorative and/or protective finish to the coated substrate. Accordingly, the present invention is further directed to a substrate coated at least in part with the coating of the present invention, wherein the substrate comprises part of a vehicle. "Vehicle" is used herein in its broadest sense and includes all types of vehicles, such as but not limited to cars, trucks, buses, vans, golf carts, motorcycles, bicycles, railroad cars. It will be appreciated that the portion of the vehicle that is coated according to the present invention may vary depending on why the coating is being used. For example, anti-chip primers may be applied to some of the portions of the vehicle as described above. When used as a colored basecoat or monocoat, the present coatings will typically be applied to those portions of the vehicle that are visible such as the roof, hood, doors trunk lid, but may also be applied to other areas such as inside the trunk, inside the door. Clearcoats will typically be applied to the exterior of a vehicle.

In some embodiments, the coating of the present invention is a pigmented layer in a multilayer coating that is applied using a wet-on-wet method. As used herein, a "wet-on-wet method" is defined as a method that comprises a first step of applying a first coating composition to at least a portion of the surface of a substrate and then, without substantially curing the first layer, applying a second coating composition. Optionally, a third coating composition is applied in a "wet-on-wet-on-wet" type of application process to the substrate coated with the first and second coat. The applied coating compositions are all cured simultaneously to provide a multilayer coating system. One or more of the layers in this system may comprise the coating of the present invention.

Coil coatings, having wide application in many industries, are also within the scope of the present invention; the present coatings are particularly suitable as coil coatings due to their flexibility, as discussed above. Coil coatings also typically comprise a colorant.

As used herein, unless otherwise expressly specified, all numbers such as those expressing values, ranges, amounts or percentages may be read as if prefaced by the word "about", even if the term does not expressly appear. Any numerical range recited herein is intended to include all sub-ranges subsumed therein. Plural encompasses singular and vice versa. For example, while the invention has been described in terms of "a" seed stage stabilizer, "an" acrylic polymer stabilizer, "an" ethylenically unsaturated monomer, "a" non-VOC compound, "a" reactive diluent, mixtures of these and other components, can be used. Also, as used herein, the term "polymer" is meant to refer to prepolymers, oligomers and both homopolymers and copolymers; the prefix "poly" refers to two or more. When ranges are given, any endpoints of those ranges and/or numbers within those ranges can be combined with the scope of the present invention.

### EXAMPLES

The following examples are intended to illustrate the invention.

### EXAMPLE 1

A polyester intermediate 1 for a seed stage stabilizer was prepared as follows:

**Table 1**

| Ingredients | Parts by Weight |
|---|---|
| Charge #1 | |
| 12-Hydroxystearic acid | 2304 |
| Toluene | 411 |

| Charge #2 | |
|---|---|
| Methane Sulfonic Acid | 4.6 |

| Charge #3 | |
|---|---|
| Glycidyl Methacrylate | 279 |
| t-Butyl Catechol | 2.3 |
| N,N-Dimethyl-dodecylamine | 9.2 |
| Toluene | 104 |

Charge #1 was added into a 5-liter, 4-necked flask equipped with a motor-driven steel stir blade, a thermocouple, a nitrogen inlet, and a water-cooled condenser. The reaction mixture was heated to reflux (the initial reflux temperature was approximately 130°C, and this increased to about 155°C by the end of the process). Charge #2 was added into the reaction flask after the reaction mixture was melted. After 90% of the water (approximately 100 grams) from the reaction was collected, one sample was taken to measure the acid value using titration method. The reaction mixture was cooled to 130°C when the acid value was between 29 and 30. The reaction mixture was then air sparged and Charge #3 was added into the reaction flask. The reaction mixture was held at 130°C until the acid value was below 0.4. The intermediate solution thus obtained had an acid value of 0.4 mg KOH per gram of resin (measured by titration); Mw 5973 and Mn 3595 (measured by gel permeation chromatography using polystyrene standards); and a free monomer glycidyl methacrylate content of 2.63 weight % (measured by gas chromatography).

### EXAMPLE 2

Seed Stage Stabilizer 2 was prepared as follows:

**Table 2**

| Ingredients | Parts by Weight |
|---|---|
| Charge #1 | |
| Butyl Acetate | 545 |

| Charge #2 | |
|---|---|
| Polyester Intermediate 1 from Example 1 | 775 |
| Methyl Methacrylate | 588 |
| Glycidyl Methacrylate | 56 |
| Xylene | 474 |

| Charge #3 | |
|---|---|
| Butyl Acetate | 418 |
| VAZO 64¹ | 25.8 |

| Charge #4 | |
|---|---|
| Butyl Acetate | 75 |

| Charge #5 | |
|---|---|
| Methyacrylic Acid | 11.4 |
| t-Butyl Catechol | 0.16 |
| N,N-Dimethyldodecylamine | 1.5 |

| | |
|---|---|
| ¹VAZO 64 is 2,2'-azobis(2-methylpropionitrile), available from DuPont. | |

Charge #1 was added into a 5-liter, 4-necked flask and heated to 99°C under a nitrogen blanket. At 99°C, Charges #2 and #3 were added into the reaction flask over 3 hours. Charge #4 was used to rinse Charges #2 and #3 after they were finished. The reaction mixture was then held at 99°C for 4 hours. Charge #5 was added when the hold was complete, and then the reaction mixture was heated to 135°C. The reaction mixture was held at 135°C for 4 hours. The seed stage stabilizer thus obtained had an acid value of 0.14 mg KOH per gram of resin (measured by titration); Mw 18434 and Mn 2616 (measured by gel permeation chromatography using polystyrene standards); and a free monomer content of methyl methacrylate of 1.47 weight % and glycidyl methacrylate of 0.13 weight % (measured by gas chromatography).

### EXAMPLE 3

Acrylic Stabilizer 3 was prepared as follows:

**Table 3**

| Ingredients | Parts by weight |
|---|---|
| Charge #1 | |
| Butyl Acetate | 1000 |

| Charge #2 | |
|---|---|
| LUPEROX 270² | 80 |
| Butyl Acetate | 100 |

| Charge #3 | |
|---|---|
| 2-Ethylhexyl Acrylate | 600 |
| Glycidyl Methacrylate | 100 |
| Butyl Methacrylate | 600 |
| Butyl Acrylate | 500 |
| Hydroxyethyl Methacrylate | 200 |
| 1,6-Hexanediol Diacrylate | 30 |

| Charge #4 | |
|---|---|
| VAZO 67³ | 10 |
| Butyl Acetate | 60 |

| Charge #5 | |
|---|---|
| 4-Methoxyphenol | 3.8 |
| Dimethyl Ethanolamine | 10 |

| Charge #6 | |
|---|---|
| Methacrylic Acid | 15 |
| Butyl Acetate | 60 |

| | |
|---|---|
| ²LUPEROX 270 is t-butyl-per-3,5,5-trimethylhexanoate, available from Arkema, Inc. ³VAZO 67 is 2,2'-azobis(2-methylbutyronitrile), available from DuPont. | |

Charge #1 was added into a 5-liter, 4-necked flask equipped with a motor-driven stir blade, a thermocouple, a nitrogen inlet, and a water-cooled condenser. The reaction mixture was heated to reflux (approximately 125°C), by a mantle controlled by the thermocouple via a temperature feedback control device. Charges #2 and #3 were added dropwise via addition funnels over 4 hours, while the reaction mixture continued to reflux. After the addition was complete, the reaction mixture was held at reflux for 1 hour, and then the reaction mixture was cooled to 110°C. At 110°C, Charge #4 was added over 10 min, and then the reaction mixture was held at 110°C for 1 hour. After the 1-hour hold, the nitrogen inlet was switched to an air sparge. After sparging with air for 30 min, Charge #5 was added to the reaction flask followed by Charge #6. The reaction mixture was held at 110°C for 2 hours. The acrylic polymer solution thus obtained had an acid value 0.3 mg KOH per gram of resin (measured by titration); Mw 11415 and Mn 2630 (measured by gel permeation chromatography using polystyrene standards); and a total free monomer content of <0.50% (measured by gas chromatography).

### EXAMPLE 4

Acrylic Stabilizer 4 was prepared as described above for Acrylic Stabilizer 3 using the materials described in Table 4:

**Table 4**

| Ingredients | Parts by weight |
|---|---|
| Charge #1 | |
| Butyl Acetate | 225 |

| Charge #2 | |
|---|---|
| LUPEROX 270 | 20 |
| Butyl Acetate | 25 |

| Charge #3 | |
|---|---|
| 2-Ethylhexyl Acrylate | 260 |
| Glycidyl Methacrylate | 15 |
| Butyl Methacrylate | 50 |
| Butyl Acrylate | 125 |
| Hydroxyethyl Methacrylate | 50 |
| 1,6-Hexanediol Diacrylate | 7.5 |

| Charge #4 | |
|---|---|
| VAZO 67 | 2.5 |
| Butyl Acetate | 20 |

| Charge #5 | |
|---|---|
| 4-Methoxyphenol | 0.8 |
| Dimethyl Ethanolamine | 2.5 |

| Charge #6 | |
|---|---|
| Methacrylic Acid | 6.0 |
| Butyl Acetate | 6.0 |

### EXAMPLE 5

Non-aqueous Dispersion 5 was prepared as follows:

**Table 5**

| Ingredients | Parts by Weight |
|---|---|
| Charge #1 | |
| Heptane | 91.5 |

| Charge #2 | |
|---|---|
| Methyl Methacrylate | 6.6 |
| Seed Stage Stabilizer 2 | 12.9 |

| Charge #3 | |
|---|---|
| VAZO 67 | 0.6 |
| Heptane | 24 |

| Charge #4 | |
|---|---|
| Styrene | 30 |
| Methyl Methacrylate | 30 |
| Glycidyl Methacrylate | 7.5 |
| Methacrylic acid | 4.5 |
| Seed Stage Stabilizer 2 | 7.5 |
| Acrylic Stabilizer 3 | 67.5 |
| ARMEEN DMCD⁴ | 0.6 |
| n-Octylmercaptan | 2.0 |
| Heptane | 90 |
| OXSOL 100⁵ | 45 |
| Hydroxyethyl Methacrylate | 45 |

| Charge #5 | |
|---|---|
| VAZO 67 | 1.5 |
| OXSOL 100 | 7.5 |

| Charge #6 | |
|---|---|
| OXSOL 100 | 7.5 |
| VAZO 67 | 1.5 |

| Charge #7 | |
|---|---|
| OXSOL 100 | 115 |

| | |
|---|---|
| ⁴ARMEEN DMCD is dimethylcocoamine, available from Akzo Nobel, Inc. ⁵OXSOL 100 is 1-chloro-4-(trifluoromethyl)-benzene, available from Milenia Agro Ciencieas S.A. | |

Charge #1 was added into a 5-liter, 4-necked flask equipped with a motor-driven steel stir blade, a thermocouple, a nitrogen inlet, and a water-cooled condenser. The reaction mixture was heated to 90°C, by a mantle controlled by the thermocouple via a temperature feedback control device. Charges #2 and #3 were added dropwise via addition funnel over 30 min, and then the reaction mixture was held at 90°C for 30min. After the hold, Charge #4 and #5 were added over 3 hours, and then the reaction mixture was held at 90°C for 1 hour. After the hold, Charge #6 was added over 30 min, and Charge #7 was used to rinse the Charge #6 addition funnel. The reaction mixture was then held at 90°C for 1 hour. The non-aqueous dispersion thus obtained had a volume averaged particle size of 130 nm (measured by Zetasizer).

The above reaction mixture was heat to 40°C and the heptane solvent in the reaction mixture was distilled out under 0.026 bar (20 inch Hg) vacuum pressure over 3 hours. The non-aqueous dispersion resin thus obtained had residual heptane of 0.05 weight % (measured by gas chromatography).

### EXAMPLE 6

Non-aqueous Dispersion 6 was prepared as described above for Non-aqueous Dispersion 5 using the materials described in Table 6:

**Table 6**

| Ingredients | Parts by Weight |
|---|---|
| Charge #1 | |
| ISOPAR E⁶ | 732 |

| Charge #2 | |
|---|---|
| Methyl Methacrylate | 53.5 |
| Seed Stage Stabilizer 2 | 104 |

| Charge #3 | |
|---|---|
| VAZO 67² | 6.05 |
| Mineral Spirits | 192.2 |

| Charge #4 | |
|---|---|
| Methyl Methacrylate | 840.7 |
| Glycidyl Methacrylate | 30.2 |
| Methacrylic acid | 15.2 |
| Acrylic Stabilizer 4 | 531.2 |
| ARMEEN DMCD | 6.1 |
| n-Octylmercaptan | 15.6 |
| ISOPAR E | 720.2 |
| Hydroxyethyl Methacrylate | 120.7 |

| Charge #5 | |
|---|---|
| VAZO 67 | 12.1 |
| Butyl Acetate | 15 |

| Charge #6 | |
|---|---|
| Butyl Acetate | 30 |
| VAZO 67 | 6.0 |

| Charge #7 | |
|---|---|
| Butyl Acetate | 210 |

| | |
|---|---|
| ⁶ISOPAR E is an isoparaffinic hydrocarbon solvent, available from ExxonMobil Chemical | |

### EXAMPLE 7

Non-aqueous Dispersion Resin 7 was prepared as follows:

**Table 7**

| Ingredients | Parts by Weight |
|---|---|
| Charge #1 | |
| Non-aqueous Dispersion 5 | 476 |
| 1,6-Hexanediol Diacrylate | 400 |

Charge #1 was added into a 2-liter, 4-necked flask equipped with a motor-driven steel stir blade, a thermocouple, a nitrogen inlet, and a water-cooled condenser. The reaction mixture was heated to 70°C, and the volatile solvents in the reaction mixture were stripped out under 0.026 - 0.033 bar (20-25 inch Hg) vacuum pressure over 5-6 hours.

### EXAMPLES 8-9: SEED TEST

The seed test is conducted as follows: ingredients 1-12 shown in the table below were added to a glass j ar and mixed with a propeller type blade at 575 rpm for one hour. Samples were drawn down onto a panel coated with ED6060C (cationic electrocoat available from PPG Industries, Inc.) using a 0.032 mm² (7 mil square) (P.G. & T.CO. #1) drawdown bar and baked for 30 minutes at 140°C.

**Table 1: Seed Test Formulas**

| **Ingredients** | | **Example 8 Control Microgel** | **Example 9 NAD 6** |
|---|---|---|---|
| 1 | Diisobutyl Ketone | 43.47 | 43.47 |
| 2 | Butyl Acetate | 7.03 | 7.03 |
| 3 | DOWANOL DPM⁷ | 24.38 | 24.38 |
| 4 | EVERSORB 74⁸ | 3.72 | 3.72 |
| 5 | Acrylic Microgel Resin⁹ | 102.71 | --- |
| 6 | NAD Resin from Example 6 | --- | 102.71 |
| 7 | RESIMENE 758¹⁰ | 116.92 | 116.92 |
| 8 | Acrylic¹¹ | 54.38 | 54.38 |
| 9 | Acrylic¹² | 39.31 | 39.31 |
| 10 | Polyester¹³ | 31.49 | 31.49 |
| 11 | Polyester¹⁴ | 30.35 | 30.35 |
| 12 | Ethanol | 20.54 | 20.54 |
| 13 | Phosphatized Epoxy¹⁵ | 1.71 | 1.71 |
| TOTALS | | 476.01 | 476.01 |

| | | | |
|---|---|---|---|
| ⁷DOWANOL DPM is dipropylene glycol monomethyl ether, available from Dow Chemical Co. ⁸EVERSORB 74 is a benzotriazole UV absorber, available from Everlight Chemical Industrial Corp. ⁹The acrylic microgel resin is described in Example II of US 4,147,688A. ¹⁰RESIMENE 758 is a methylated/butylated melamine resin, available from INEOS Melamines. ¹¹Acrylic component #8 is a proprietary PPG resin supplied at 67% solids. ¹²Acrylic component #9 is a proprietary PPG resin supplied at 52% solids. ¹³Polyester component #10 is a proprietary PPG resin supplied at 100% solids. ¹⁴Polyester component #11 is a proprietary PPG resin supplied at 90% solids. ¹⁵Phosphatized epoxy component #13 is a proprietary PPG resin supplied at 61% solids. | | | |

The baked panels were inspected visually for "seeds", or surface defects in the film, and the average number of seeds per 6.45 cm² (square inch) was calculated. A sample that had less than about 3-4 seed per 6.45 cm² (square inch) was described as a material that passed the seed test.

**Table 2: Seed Test Results**

| Example | Test Resin | # seeds / in² | Test Result |
|---|---|---|---|
| 8 | Control Microgel | >10 | FAIL |
| 9 | Example 6 NAD | <3 | PASS |

### Examples 10-13: NAD RESIN IN PRIMER AND BASECOAT

The coatings were spray applied onto 10.2 cm by 30.5 cm (4 inch by 12 inch) steel panels that were coated with PPG ELECTROCOAT (ED 6060CZ) commercially available from PPG Industries. The substrate panels were obtained from ACT Test Panels, Inc. of Hillsdale, Michigan. The primers were applied in one coat, then given a five minute ambient flash before applying the basecoat. The dry film thickness of the primer layer was approximately 25.4 µm (1.0 mils. The basecoats were applied in two coats with no flash between coats. The dry film thickness of the basecoat layer was approximately 19 µm (0.75 mils). The composite coatings were then given a five minute ambient flash before two coats of a clearcoat (TMAC8000, commercially available from PPG Industries) were applied onto each basecoat. A one minute ambient flash was given between coats of clear. The dry film thickness of the clearcoat layer was approximately 49.5 µm (1.95 mils). The composite coatings were then given a five minute ambient flash followed by a five minute at 180°F (82°C) heated flash followed by a thirty minute bake at 285° (140°C).

### Examples 10 & 11

| Component | Example 10 Control Microgel | Example 11 NAD 6 |
|---|---|---|
| n-Butyl Acetate | 10.36 | 10.36 |
| SOLVESSO 100¹⁶ | 2.22 | 2.22 |
| DOWANOL PNB¹⁷ | 2.22 | 2.22 |
| n-Propanol | 6.42 | 6.42 |
| 1-Pentanol | 5.24 | 5.24 |
| Methyl Isobutyl Ketone | 17.35 | 13.50 |
| Eastman EEP¹⁸ | 17.35 | 13.50 |
| Acrylic Microgel Resin¹⁹ | 13.34 | --- |
| NAD Resin from Example 6 | --- | 21.19 |
| CYMEL 1158²⁰ | 33.80 | 33.80 |
| Polyester Resin²¹ | 56.24 | 52.06 |
| Polyester Resin²² | 6.42 | 6.42 |
| CYMEL U-80²³ | 2.75 | 2.75 |
| White Tint Paste²⁴ | 123.80 | 123.80 |
| Black Tint Paste²⁵ | 1.72 | 1.72 |
| Yellow Tint Paste²⁶ | 0.80 | 0.80 |
| 341CG5928 Acrylic Resin²⁷ | 0.83 | 0.83 |
| Additive²⁸ | 1.70 | 1.70 |
| CYCAT 600²⁹ | 0.67 | 0.67 |
| | | |
| TOTAL (grams) | 303.23 | 299.20 |

| | | |
|---|---|---|
| ¹⁶Solvent, available from Exxon. ¹⁷Solvent, available from Dow Chemical. ¹⁸Solvent, available from Eastman Chemical. ¹⁹Acrylic micro-particle as described in Example II of US 4,147,688A. ²⁰Resin, available from Cytec Industries. ²¹Proprietary PPG polyester resin. ²²Proprietary PPG polyester resin. ²³Resin, available from Cytec Industries. ²⁴Proprietary PPG white tint paste. ²⁵Proprietary PPG black tint paste. ²⁶Proprietary PPG yellow tint paste. ²⁷Resin, available from BASF. ²⁸Proprietary PPG additive. ²⁹Catalyst, available from Cytec Industries. | | |

### Basecoat Examples 12 & 13

| Component | Example 12 Control Microgel | Example 13 NAD 6 |
|---|---|---|
| n-Butyl Acetate | 15.61 | 15.61 |
| Diisobutyl Ketone | 45.19 | 43.19 |
| n-Butyl Propionate | 9.24 | 9.24 |
| Amyl Alcohol | 5.53 | 5.53 |
| Acrylic Microgel Resin | 25.25 | --- |
| NAD Resin from Example 6 | --- | 39.76 |
| RESIMENE CE-6528³⁰ | 34.01 | 34.01 |
| SUPER BECKAMINE 1202³¹ | 7.23 | 7.23 |
| RESIMENE 758³² | 11.57 | 11.57 |
| Extender Paste³³ | 16.79 | 16.79 |
| Acrylic Resin³⁴ | 8.23 | 8.23 |
| Acrylic Resin³⁵ | 26.84 | 20.75 |
| Polyester Resin³⁶ | 16.14 | 12.55 |
| Epoxy Resin³⁷ | 0.48 | 0.48 |
| POLYMEG 1000³⁸ | 1.88 | 1.88 |
| Polyester Resin³⁹ | 3.73 | 3.73 |
| Black Tint Paste⁴⁰ | 0.03 | 0.03 |
| TOYO Aluminum Paste 634A⁴¹ | 11.52 | 11.52 |
| TSB2044A Aluminum Paste⁴² | 11.52 | 11.52 |
| CYCAT 600 | 0.83 | 0.83 |
| | | |
| TOTAL (grams) | 251.62 | 254.45 |

| | | |
|---|---|---|
| ³⁰Resin, available from INEOS Melamines. ³¹Resin, available from INEOS Melamines. ³²Resin, available from INEOS Melamines. ³³Proprietary PPG extender paste. ³⁴Proprietary PPG acrylic resin. ³⁵Proprietary PPG acrylic resin. ³⁶Proprietary PPG polyester resin. ³⁷Proprietary PPG epoxy resin. ³⁸Resin, available from Lyondell Petrochemical. ³⁹Proprietary PPG polyester resin. ⁴⁰Proprietary PPG black tint paste. ⁴¹Aluminum, available from TOYO Aluminum K.K. ⁴²Aluminum, available from TOYAL America Inc. | | |

The Data Table below provides a summary of appearance and solids comparing a standard coating system containing an acrylic microparticle to a coating system with the NAD resin of Example 6. Horizontal appearance and solids are similar. Vertical appearance is improved with the new NAD 6 resin.

**Data Table**

| **Appearance Properties and Solids** | | | | | | | | |
|---|---|---|---|---|---|---|---|---|
| Example | Position | % Theory Weight Solids | | X-Rite Color⁴³ | 20° gloss⁴⁴ | DOI⁴⁵ | BYK WAVESCAN⁴⁶ | |
| | | Primer | Basecoat | Flop Index | | | Long Wave | Short Wave |
| 10+12 | Horizontal | 60.2 | 47.3 | 17.4 | 99 | 86 | 3.9 | 20.1 |
| 11+13 | Horizontal | 61.1 | 46.8 | 16.8 | 99 | 85 | 4.3 | 21.0 |
| 10+12 | Vertical | 60.2 | 47.3 | 17.7 | 99 | 61 | 26.6 | 39.7 |
| 11+13 | Vertical | 61.1 | 46.8 | 17.1 | 99 | 66 | 25.8 | 33.3 |

| | | | | | | | | |
|---|---|---|---|---|---|---|---|---|
| ⁴³X-Rite Color Instrument model number MA6811 manufactured by X-Rite, Inc. of Grandville, Michigan. ⁴⁴NOVO GLOSS statistical 20° glossmeter available from Paul N. Gardner Company, Inc. of Pompano Beach, Florida. ⁴⁵DOI meter manufactured by TRICOR Systems, Inc. of Elgin, Illinois. ⁴⁶BYK WAVESCAN DOI instrument manufactured by BKY Gardner USA of Columbia, Maryland. | | | | | | | | |

Data Table 2 below provides a summary of manufacturing robustness. The control acrylic microgel does not have the capability of post addition to the paint, as it results in seed formation and a poor Hegman value. The new NAD resin has good manufacturing robustness and does not form seeds when post-added to the paint formula. Although this procedure considers whether seeds are formed, it is not the "seed test" as described above.

**Data Table 2**

| | **Manufacturing Robustness Check** | | |
|---|---|---|---|
| Example | | Hegman⁴⁷ | Comment |
| 12 | | 6.5 or 20µ | No Seeds |
| 13 | | 6.5 or 20µ | No Seeds |
| 12⁴⁸ | | 2.0 or 75µ | Seeds |
| 13⁴⁹ | | 6.5 or 20µ | No Seeds |

| | | | |
|---|---|---|---|
| ⁴⁷Hegman gauge available from Paul N. Gardner Company, Inc. of Pompano Beach, Florida. Hegman measures the size of particles in a wet film, where a lower number is a better score. ⁴⁸Post addition of control acrylic microgel resin to paint formula. ⁴⁹Post addition of NAD resin to paint formula. | | | |

## Claims

1. A non-aqueous dispersion comprising a continuous phase and a dispersed phase, wherein the dispersed phase comprises a dispersion polymerization reaction product prepared from a reaction mixture comprising an ethylenically unsaturated monomer, an acrylic polymer stabilizer, and an aliphatic polyester stabilized seed polymer.

2. The non-aqueous dispersion of Claim 1, wherein the polyester has a carbon to oxygen ratio of 4:1 to 20:1.

3. The non-aqueous dispersion of Claim 1, wherein the polyester comprises poly-12-hydroxystearic acid.

4. The non-aqueous dispersion of Claim 1, wherein the polyester has a weight average molecular weight of 10,000 to 30,000.

5. The non-aqueous dispersion of Claim 1, wherein the continuous phase contains less than 10% volatile organic compounds.

6. The non-aqueous dispersion of Claim 1, wherein the continuous phase comprises a reactive diluent.

7. The non-aqueous dispersion of any of Claim 1-6, wherein the particles have an average particle size of 180 nm or less.

8. A coating comprising the non-aqueous dispersion of any of Claims 1 or 7.

## Patentansprüche

1. Eine nichtwässrige Dispersion umfassend eine kontinuierliche Phase und eine dispergierte Phase, wobei die dispergierte Phase ein Dispersionspolymerisationsreaktionsprodukt hergestellt aus einer Reaktionsmischung umfassend ein ethylenisch ungesättigtes Monomer, einen Acrylpolymerstabilisator und ein mit einem aliphatischem Polyester stabilisiertes Saatpolymer umfasst.

2. Die nichtwässrige Dispersion gemäß Anspruch 1, wobei der Polyester ein Kohlenstoff-zu-Sauerstoff-Verhältnis von 4:1 bis 20:1 aufweist.

3. Die nichtwässrige Dispersion gemäß Anspruch 1, wobei der Polyester Poly-12-hydroxystearinsäure umfasst.

4. Die nichtwässrige Dispersion gemäß Anspruch 1, wobei der Polyester ein gewichtsmittleres Molekulargewicht von 10.000 bis 30.000 aufweist.

5. Die nichtwässrige Dispersion gemäß Anspruch 1, wobei die kontinuierliche Phase weniger als 10% flüchtige organische Verbindungen enthält.

6. Die nichtwässrige Dispersion gemäß Anspruch 1, wobei die kontinuierliche Phase einen Reaktivverdünner enthält.

7. Die nichtwässrige Dispersion gemäß irgendeinem der Ansprüche 1 bis 6, wobei die Teilchen eine durchschnittliche Größe von 180 nm oder weniger aufweisen.

8. Eine Beschichtungszusammensetzung umfassend die nichtwässrige Dispersion gemäß irgendeinem der Ansprüche 1 bis 7.

## Revendications

1. Dispersion non-aqueuse comprenant une phase continue et une phase dispersée, dans laquelle la phase dispersée comprend un produit de réaction de polymérisation en dispersion, préparé à partir d'un mélange réactionnel comprenant un monomère à insaturation éthylénique, un polymère polyacrylique stabilisant, et un polyester aliphatique en tant que polymère germe stabilisé.

2. Dispersion non-aqueuse conforme à la revendication 1, dans laquelle le polyester présente un rapport du carbone à l'oxygène de 4/1 à 20/1.

3. Dispersion non-aqueuse conforme à la revendication 1, dans laquelle le polyester comprend du poly(acide 12-hydroxy-stéarique).

4. Dispersion non-aqueuse conforme à la revendication 1, dans laquelle le polyester présente une masse molaire moyenne en poids de 10 000 à 30 000.

5. Dispersion non-aqueuse conforme à la revendication 1, dans laquelle la phase continue contient moins de 10 % de composés organiques volatils.

6. Dispersion non-aqueuse conforme à la revendication 1, dans laquelle la phase continue comprend un diluant réactif.

7. Dispersion non-aqueuse conforme à l'une des revendications 1 à 6, dans laquelle les particules présentent une taille moyenne de particule inférieure ou égale à 180 nm.

8. Revêtement comprenant une dispersion non-aqueuse conforme à l'une des revendications 1 à 7.
